# EUROPEAN PATENT APPLICATION

(11) **EP 1 389 695 A2**
(43) Date of publication of application: **18.02.2004**
(21) Application number: 03018457.6
(22) Date of filing: 14.08.2003
(51) Int. Cl.: F16D 51/22

(54) **Drum brake**

(30) Priority: 16.08.2002 JP 2002237330
(71) Applicant: YAMAHA HATSUDOKI KABUSHIKI KAISHA, Iwata-shi Shizuoka-ken (JP)
(72) Inventor: Migita, Itsuro, Iwata-shi, Shizuoka-ken (JP); Kohda, Hideo, Iwata-shi, Shizuoka-ken (JP); Hori, Sadahiko, Iwata-shi, Shizuoka-ken (JP)
(74) Representative: Grünecker, Kinkeldey, Stockmair & Schwanhäusser Anwaltssozietät

(57) **Abstract**

For decreasing a size of a drum brake for a vehicle it is provided a drum brake (3) for a vehicle (1) comprising a pair of brake shoes (15A,15B) and a fixed member (17), wherein one end of each brake shoe is pivotally supported by said fixed member, and wherein there is provided a contact portion of said end of each brake shoe and of said fixed member comprising a complementary shape. The vehicle comprises a rear arm (5) for supporting a rear wheel (RW1), and the drum brake further comprises a fixed member (17) and a cam (19) for causing said pair of brake shoes to pivot, wherein a rotation lever (21) for rotating said cam and an operation lever (23) pivotally connected at its one end to said rotation lever by a link (26) are provided within said fixed member.

## Description

This invention relates to a drum brake for a vehicle.

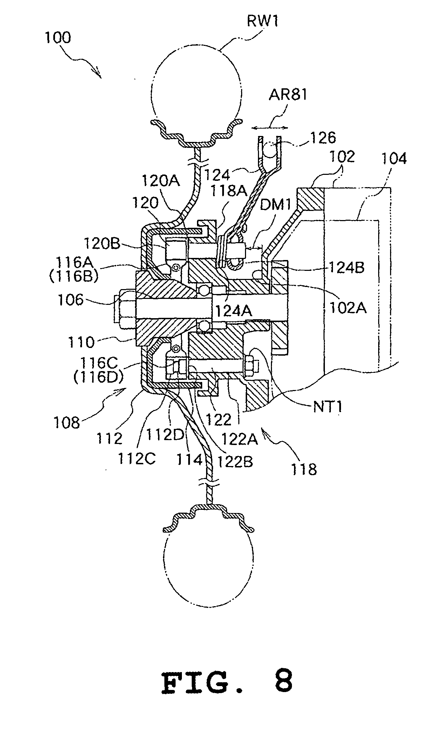

Fig. 8 is a sectional view showing a general construction of a conventional drum brake 100 and its surrounding parts.

The conventional drum brake 100 is used for stopping the rotation of, for example, a rear wheel RW1 of a two-wheeler.

At the rear end of a rear arm 102 extending rearward from a main frame of the two-wheeler is supported the rear wheel RW1 for rotation with respect to the rear arm 102, and inside the rear end of the rear arm 102 is provided a rear wheel drive mechanism 104 (for example, a transmission mechanism) for rotatably driving the rear wheel RW1.

That is, at the rear end of the rear arm 102 is supported the middle section of a rotary shaft member 106 for rotation with respect to the rear arm 102, the base section of the rotary shaft member 106 is interlocked to the rear wheel drive mechanism 104, and at the forward end of the rotary shaft member 106 is fixed integrally a rotary member 108.

The rotary member 108 is formed, for example, by a cylindrical middle member 110 fixed to the forward end of the rotary shaft member 106, and a wheel support member 112 fixed integrally to the outside circumference of the middle member 110 for supporting the rear wheel RW1.

With the rotary member 108 is formed a hollow cylindrical brake drum 114 constituting the drum brake 100. The axis of the rotary shaft member 106 and that of the hollow cylindrical brake drum 114 approximately coincide with each other.

In the drum brake 100, inside the brake drum 114 rotating with the rotary member 108 are disposed a pair of semi-circular brake shoes 116A, 116B around the rotation center of the brake drum 114 (rotation center of the rotary shaft member 106).

Also, one end each of the opposing brake shoes 116A, 116B is brought in engagement with an anchor member 122 provided in a fixed member 118 while between the other ends of the brake shoes 116A, 116B is placed an oval cam section 120B of a cam 120, and the cam 120 is supported on the fixed member 118 for rotation.

Further, rotation of the cam 120 causes the other ends of the brake shoes 116A, 116B to be engaged with the cam section 120B of the cam 120 and the brake shoes 116A, 116B to be stretched open, so that brake linings (not shown) provided on the outside circumferential surfaces of the brake shoes 116A, 116B come in frictional engagement with the inside circumferential surface of the brake drum 114.

The foregoing frictional engagement causes the rotating rear wheel RW1 to be stopped, or reduce its rotational speed.

The cam 120 and the anchor member 122 are each formed in an approximately columnar shape and disposed approximately symmetrical to each other with respect to the rotary member 106, and their axes are arranged parallel to that of the rotary member 106.

The anchor member 122 is formed by a member separate from the fixed member 118. Also, the anchor member 122 is provided, in the axial middle section, with a flanged portion 122B of a large outside diameter, and on the base end side in the axial direction, with a columnar portion 122A of a smaller outside diameter than the flanged portion 122B.

The columnar portion 122A is fitted in a through hole provided in the fixed member 118, and further, at the end of the anchor member 122 on the base end side is formed, for example, a male thread, on which is fitted, for example, a nut NT1, and the anchor member 122 is fixed to the fixed member 118, with the flanged portion 122B and the nut NT1 holding the fixed member 118 in between.

On the forward end side of the anchor member 122 is formed a columnar engaging section 112C for engagement with one end each of the brake shoes 116A, 116B, and in the axial middle of the engaging section 112C is provided a columnar brake shoe retainer groove 112D of a smaller outside diameter than the engaging section 112C. The brake shoe retainer groove 112D is a groove for retaining the brake shoes 116A, 116B such that one end each of the brake shoes 116A, 116B are prevented from moving in the axial direction of the anchor member 122.

Engaging sections of the brake shoes 116A, 116B in engagement with the engaging section 112C of the anchor member 122 are each formed in a semi-cylindrical concave shape such that they are in face-contact with the engaging section 112C, and further, in the middle parts of the engaging sections of the brake shoes 116A, 116B in the direction of thickness are provided projections 116C, 116D for engagement with the brake shoe retainer groove 112D.

The cam 120 has an approximately columnar shape; it is provided, on the forward end side, with the cam section 120B with an axial cross-section of oval shape; it is engaged, at the axial middle section, with the fixed member 118 for rotation; and it is provided, on the base end side (side on which the rear wheel drive mechanism 104 is provided), with a rotation lever 124 integrally.

The rotation lever 124 is fixed integrally to the cam 120, with a through hole at the base end thereof being engaged with the base end of the cam 120.

Adjacent to the cam section 120B formed on the forward end side of the cam 120 is provided, on the base end side of the cam 120, a flanged portion 120A of an outside diameter larger than the inside diameter of an engagement hole of the fixed member 118.

When the cam 120 is fitted to the fixed member 118, the cam 120 is inserted, with the base end of the cam 120 in front, into the engagement hole of the fixed member 118 from the side on which the brake shoes 116A, 116B are provided, until the flanged portion 120A comes in abutment against the fixed member 118, and thereafter the rotation lever 124 is attached to the base end of the cam 120.

The base end of the rotation lever 124 in engagement with the cam 120 is formed thicker in the axial direction of the cam 120.

That is, the base end of the rotation lever 124 is formed by a plate-like section 124A, another plate-like section 124B separated away from the plate-like section 124A in the direction of thickness thereof, these plate-like sections 124A, 124B are each provided with respective through holes, in the direction of thickness and on the same axis, and the through holes are in engagement with the base end of the cam 120.

The reason why the base end of the rotation lever 124 is formed thicker is to fix the rotation lever 124 stably and firmly to the cam 120. For example, the inside diameter of the through hole at the base end of the rotation lever 124 is formed slightly larger than the outside diameter of the base end of the cam 120, so that swinging movement (in the direction of the arrow AR81) developing on the forward end side of the rotation lever 124 can be decreased to the smallest possible degree.

The forward end of the rotation lever 124 is in engagement with a core wire of a wire cable 126, and axial movement of the core wire causes the rotation lever 124 to be rotated, which rotates the cam 120. The rotation of the cam 120 causes the cam section 120B of the cam 120 to be rotated and the brake shoes 116A, 116B to be stretched open, to thereby operate the drum brake 100.

In the conventional drum brake 100 described above, since the anchor member 122 is provided in the fixed member 118 to support one end each of the brake shoes 116A, 116B, the construction of the support section of the brake shoes 116A, 116B in the drum brake 100 is complicated.

In addition, the base end of the cam 120 is protruded from the side face 118A of the fixed member 118 (side face at the side on which the rear wheel drive mechanism 104 is provided) toward the rear wheel drive mechanism 104, and the through hole provided at the base end of the rotation lever 124 is fitted on the protruded columnar portion, whereby the rotation lever 124 is fixed to the base end of the cam 120.

Therefore, in order for the rotation lever 124 to be attached to the base end of the cam 120, with the cam 120 fitted to the fixed member 118, a distance DM1 between the end face of the base end of the cam 120 and a side face 102A of the rear arm 102 on the side of the fixed member 118, should be larger than the thickness of the rotation lever 124 at the base end (distance between the outside surface of the plate-like portion 124A and that of the plate-like portion 124B).

If a large distance DM1 is secured, the distance between the rear wheel RW1 or the drum brake 100 and the rear arm 102 equipped with the rear wheel drive mechanism 104 becomes larger, resulting in larger width or a lateral dimension around the rear wheel RW1 of the two-wheeler.

The foregoing problems are posed not only for the rear wheel of a two-wheeler but also for wheels for a vehicle other than two-wheelers.

In view of the foregoing, it is an object of this invention to improve a drum brake for a vehicle as indicated above so as to decrease the size of the drum brake.

The objective is solved according to the present invention by a drum brake for a vehicle comprising a pair of brake shoes and a fixed member, wherein one end of each brake shoe is pivotally supported by said fixed member, and wherein it is provided a contact portions of said end of each brake shoe and of said fixed member comprising a complementary shape.

Here, advantageously by the drum brake a construction of a support section for supporting one end each of brake shoes of the drum brake has been simplified.

According to a preferred embodiment, said contact portions are defined by supported sections provided at said respective one end of said brake shoes and by a supporting section for supporting said supported sections of said pair of brake shoes provided at said fixed member.

Therein, said supported sections comprise a convex shape and said supporting section comprises a concave shape or said supported sections comprise a concave shape and said supporting section comprises a convex shape.

Moreover, according to still another preferred embodiment, said supported sections and said supporting section are secured to each other by a bolt and a washer.

According to the present invention, the objective is also solved by a drum brake for a vehicle, which comprises a rear arm for supporting a rear wheel, comprising a pair of brake shoes, a fixed member, and a cam for causing said pair of brake shoes to pivot, wherein a rotation lever for rotating said cam and an operation lever pivotally connected at its one end to said rotation lever by a link are provided within said fixed member.

Advantageously, by the drum brake the width or lateral dimension around the wheel of the vehicle equipped with the drum brake can be decreased to the smallest possible degree.

Here, according to a preferred embodiment, said rotation lever is provided integrally on said cam, and said rotation lever, said operation lever and said link are disposed in approximately a same plane.

According to another preferred embodiment, said rotation lever comprises a shaft section supported on said fixed member for rotation, and said cam is provided integrally on said shaft section of said rotation lever.

According to a further preferred embodiment, said rotation lever, said operation lever and said link are disposed inside said rear arm of said vehicle.

According to a further preferred embodiment, said operation lever is connected at its other end to a further rotation lever connected to an operating wire of the brake drum by a middle shaft, wherein said middle shaft is joined with said operation lever inside of said rear arm and with said further rotation lever outside of said rear arm.

Further preferred embodiments of the present invention are laid down in the further subclaims.

In the following, the present invention is explained in greater detail by means of several embodiments thereof in conjunction with the accompanying drawings, wherein:
- Fig. 1: is a view showing a general construction of a two-wheeler equipped with a drum brake according to an embodiment of this invention;
- Fig. 2: is a sectional view of the drum brake, showing a cross-section IIA-IIB of Fig. 1;
- Fig. 3: is a view showing a cross-section IIIA-IIIB of Fig. 2;
- Fig. 4: is a view showing a cross-section IVA―IVB of Fig. 3;
- Fig. 5: is a view showing a portion of a wire cable at a lowest position;
- Fig. 6: is a second view showing the portion of the wire cable at the lowest position;
- Fig. 7: is a third view showing the portion of the wire cable at the lowest position; and
- Fig. 8: is a sectional view showing a general construction of a conventional drum brake and its surrounding parts.

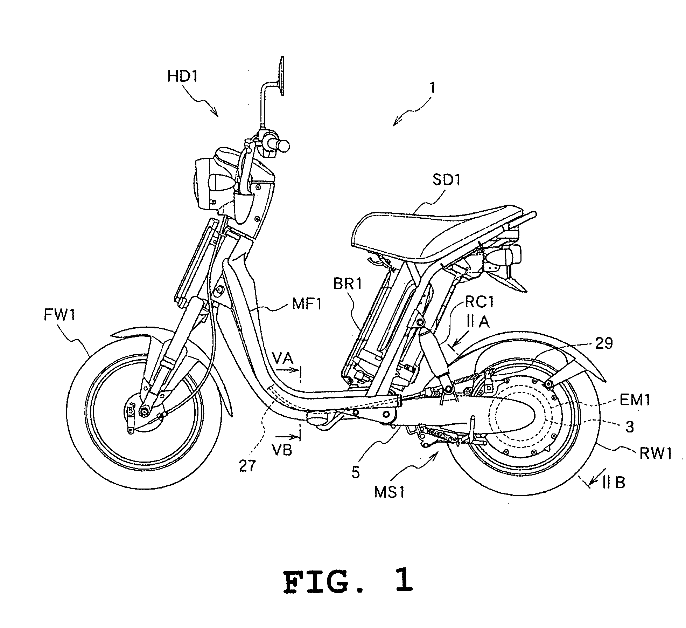

Fig. 1 is a view showing the general construction of a two-wheeler 1 equipped with a drum brake 3 according to an embodiment of this invention.

The two-wheeler 1 is a vehicle which runs through its rear wheel RW1 driven by a rotary electric machine EM1, and comprises a main frame MF1 constituting a body of the two-wheeler 1; at the forward end of the main frame MF1 is supported a handle HD1 for rotation with respect to the main frame MF1; and beneath the handle HD1 is supported a front wheel FW1 for rotation with respect to the handle HD1.

At the upper rear end of the main frame MF1 is provided a saddle SD1 for a driver of the two-wheeler 1 to sit on, and beneath the saddle SD1 is supported, on the main frame MF1, a power source for supplying power to the rotary electric machine EM1, or a battery BR1.

At the lower rear end of the main frame MF1 is supported a rear arm 5 for swinging movement, and at the rear end of the rear arm 5 is supported the rear wheel RW1 for rotation.

In the longitudinal middle (front-to-rear direction of the two-wheeler 1) of the rear arm 5 and on the upper side thereof is supported one end of a rear cushion RC1 for swinging movement, and the other end of the rear cushion RC1 is supported for swinging movement by the main frame MF1 at a position beneath the saddle SD1.

At the bottom of the two-wheeler 1 and in the longitudinal middle thereof is provided a main stand MS1 for use in keeping the two-wheeler 1 in an upright position approximately horizontally in the lateral direction when the two-wheeler 1 is at a halt.

The rotary electric machine EM1 acts as an electric motor when the two-wheeler 1 begins running or increases its speed, and acts as a generator for converting kinetic energy of the two-wheeler 1 into electric energy when the two-wheeler 1 decelerates.

When the rotary electric machine EM1 acts as a generator, electric power generated by the rotary electric machine EM1 is stored in the battery BR1.

Now, the drum brake 3 will be described.

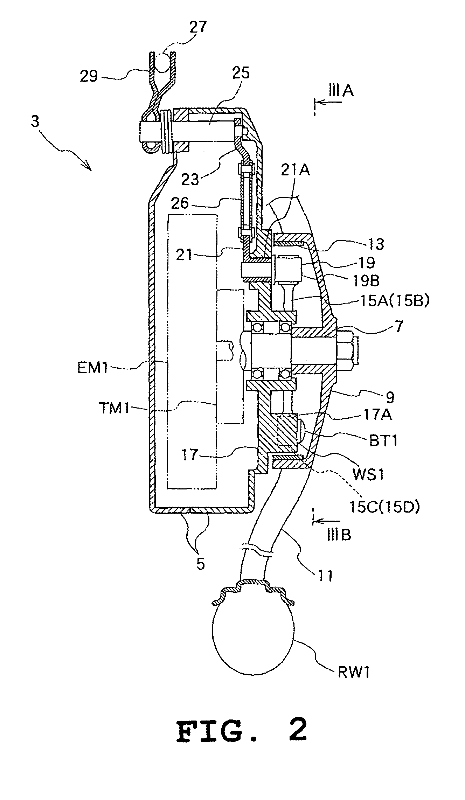

Fig. 2 is a sectional view of the drum brake 3, showing a cross-section IIA-IIB of Fig. 1.

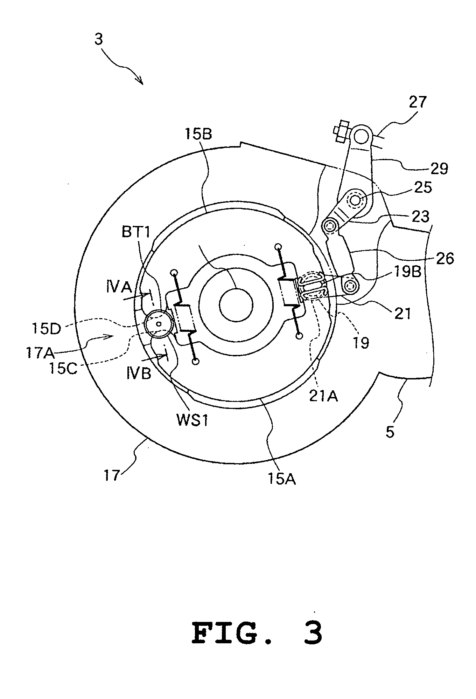

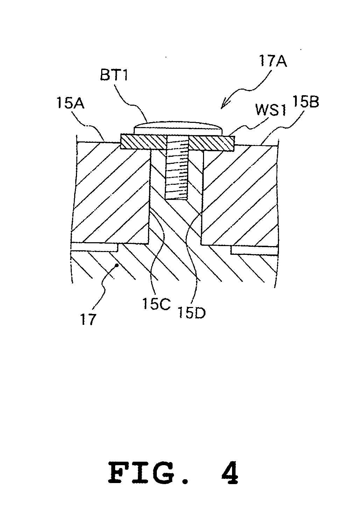

Fig. 3 is a view showing a cross-section IIIA-IIIB of Fig. 2, and Fig. 4 is a view showing a cross-section IVA-IVB of Fig. 3.

In Fig. 3, illustrations of a rotary member 9 and the brake drum 3 are omitted.

In the drum brake 3, constructions of a support section 17A provided in a fixed member (stationary member) 17 of the drum brake 3 for supporting one end each of brake shoes 15A, 15B, and of support sections, at one end each of the brake shoes 15A, 15B, to be engaged with the support section 17A, are different from those in the conventional drum brake 100, and also, in the drum brake 3, mechanisms related to an engaging section of a cam 19 and the fixed member 17 of the drum brake 3, and to a rotation lever 21 and the like for rotating the cam 19, are different from those in the conventional drum brake 100, but otherwise, the drum brake 3 is arranged approximately the same as the conventional drum brake 100.

That is, the drum brake 3 is configured such that one end each of the pair of brake shoes 15A, 15B adapted to be in frictional engagement with the inside circumferential surface of a cylindrical brake drum 13 provided in the rotary member 9, are supported by the support section 17A constituting part of the fixed member 17 provided inside the brake drum 3.

Support sections 15C, 15D of the pair of brake shoes 15A, 15B to the fixed member 17 are each formed in a convex shape and portions of the support section 17A of the fixed member 17 corresponding to the pair of brake shoes 15A, 15B are each formed in a concave shape to be fitted for rotation to the convex shaped sections (see Fig. 3).

The support sections 15C, 15D of the pair of brake shoes 15A, 15B may each be formed in a concave shape and the portions of the support section of the fixed member 17 corresponding to the pair of brake shoes 15A, 15B may each be formed in a convex shape to be fitted for rotation to the concave shaped sections.

That is, the support sections of the pair of brake shoes to the fixed member 17 may each be formed in a concave shape and the portions of the support section of the fixed member corresponding to the pair of brake shoes may each be formed in a convex shape to be fitted for rotation to the concave shaped sections.

Further, in Fig. 3, only the support section 15C of the brake shoe 15A may be formed in a concave shape and only the supporting portion of the fixed member 17 to be engaged with the support section 15C of the brake shoe 15A may be formed in a convex shape.

Also, in the drum brake 3, the cam 19 for opening/closing the other ends of the brake shoes 15A, 15B is provided on the fixed member for rotation.

Also, the rotation lever 21 for rotating the cam 19 is provided integrally on the cam 19; the rotation lever 21 and an operation lever 23 provided at one end of a middle shaft 25 for operating the operation lever 23 are disposed on approximately the same plane; and the forward end of the rotation lever 21 and that of the operation lever 23 are connected pivotally through a link 26.

Also, the rotation lever 21 has a shaft section 21A supported in the fixed member 17 for rotation, and the cam 19 is provided integrally on the shaft section 21A of the rotation lever 21.

Now, the drum brake 3 and its surrounding parts will be described in detail.

At the rear end of the rear arm 5 extending rearward from the main frame MF1 of the two-wheeler 1 is supported the rear wheel RW1 for rotation with respect to the rear arm 5, and inside the rear end portion of the rear arm 5 are provided a transmission mechanism TM1, and the rotary electric machine EM1 for rotatably driving the rear wheel RW1 through the transmission mechanism TM1.

At the rear end of the rear arm 5 is supported the middle section of a rotary shaft member 7 for rotation with respect to the rear arm 5 (fixed member 17), the base end of the rotary shaft member 7 is interlocked to the transmission mechanism TM1, and at the forward end of the rotary shaft member 7 is fixed the rotary member 9, which is adapted to support a wheel support member 11 for supporting the rear wheel RW1.

Also, with the rotary member 9 is formed the hollow cylindrical brake drum 13 constituting the drum brake 3. The axial center of the rotary shaft member 7 and that of the hollow cylindrical brake drum 13 approximately coincide with each other.

Also, in the drum brake 3, like the conventional drum brake 100, inside the brake drum 3 are disposed the pair of semi-circular brake shoes 15A, 15B around the rotation center of the brake drum 3 (rotation center of the rotary shaft member 7).

Also, one end each of the opposing brake shoes 15A, 15B is brought in engagement with the support section 17A of the fixed member while between the other ends of the brake shoes 15A, 15B is placed an oval cam section 19B of the cam 19, and the cam 19 is supported by the fixed member 17 for rotation.

Further, rotation of the cam 19 causes the other ends of the brake shoes 15A, 15B to be come in engagement with the cam section 19B of the cam 19 and the brake shoes 15A, 15B to be stretched open, so that brake linings (not shown) provided on the outside circumferential surfaces of the brake shoes 15A, 15B come in frictional engagement with the inside circumferential surface of the brake drum 3.

The foregoing frictional engagement causes the rotating rear wheel RW1 to be stopped, or reduce its rotational speed.

The support section 17A and the body of the fixed member 17 are formed by a single member. For example, the fixed member 17 having a portion corresponding to the support section 17A is cast as one member and thereafter, the cast member is shaped by machining, whereby the support section 17A is formed on the fixed member 17.

On the support section 17A is formed a pair of engaging portions adapted to be engaged with one end each of the brake shoes 15A, 15B and formed in a concave arcuate shape. The pair of engaging portions are formed approximately symmetrical to each other with respect to a straight line connecting the rotation axis of the rotary shaft member 7 and the center of the support section 17A (see Fig. 3), and further, with an uniform thickness in the axial direction of the rotary shaft member 7 (see Fig. 4).

At one end each of the brake shoes 15A, 15B are formed engaging (support) sections 15C, 15D, respectively, adapted to be in face-contact with the corresponding engaging portions of the support section 17A and formed in a convex arcuate shape.

Also, as shown in Fig. 4, in order to prevent the brake shoes 15A, 15B from slipping off the fixed member 17 in the axial direction of the rotary shaft member 7, a washer WS1 and a bolt BT1 which are support members supporting the one end each of the brake shoes 15A, 15B, are fixed to the fixed member 17 at the forward end of the support section 17A (on the opposite side from the rotary electric machine EM1).

The cam 19 and the support section 17A are provided at approximately symmetrical positions with respect to the rotary shaft member 7, and the direction of the axis of the cam 19, that of thickness of the engaging portions of the support section 17A, and that of the rotation axis of the brake shoes 15B, 15C (the direction of thickness) are parallel to the axial center of the rotary shaft member 7.

The cam 19 is formed in approximately a columnar shape. At the forward end of the cam 19 is formed the cam section 19B with an axially oval cross-section and in cam engagement with the other ends of the brake shoes 15A, 15B, and the base end of the cam 19 in the axial direction is fitted in the shaft section 21A of the rotation lever 21 and fixed thereto.

That is, the shaft section 21A of the rotation lever 21 is formed in a cylindrical shape, the outside circumference of which is engaged, for rotation, with a through hole provided in the fixed member 17 and inside which is fixed the columnar base section of the cam 19.

The cam 19 and the rotation lever 21 are arranged for rotation with respect to the fixed member 17 around an axis parallel to the rotation center of the rotary shaft member 7.

To the forward end of the lever section of the rotation lever 21 is pivotally connected one end of the link (connecting rod) 26 (for rotation), and the other end of the link 26 is pivotally connected to the forward end of the operation lever 23.

The base end of the operation lever 23 is provided integrally with the base end of the middle shaft 25; the middle shaft 25 is supported for rotation, by its base end and middle portion, on the rear arm 5 and the fixed member 17; the forward end of the middle shaft 25 extends outwardly from the rear arm 5; to the extending portion is fixed the base end of a rotation lever 29; and at the forward end of the rotation lever 29 is provided a wire cable 27, as in the rotation lever 124 of the conventional drum brake 100.

The rotation center of the middle shaft 25 is approximately parallel to that of the rotary shaft member 7, and the fixed member 17 is fixed, at the rear end of the rear arm 5, to a side of the rear arm 5 (the side on which the rear wheel RW1 and the brake shoes 15A, 15B of the drum brake 3 are provided). In other words, the fixed member 17 and the rear arm 5 constitute the rear end of the rear arm 5 together, and further, a side opening at the rear end of the rear arm 5 is closed by the fixed member 17, so that a space for the rotary electric machine EM1 and the like is provided inside the rear end of the rear arm 5.

The operation lever 23, rotation lever 21 (lever section of the rotation lever 21) and link 26 are disposed in approximately the same plane. Also, the operation lever 23, rotation lever 21 (lever section of the rotation lever 21) and link 26 are disposed inside the rear arm 5 and in a narrow space between the rotary electric machine EM1 and the fixed member 17.

When the drum brake 3 is assembled into the rear arm 5, the fixed member 17 having the brake shoes 15A, 15B, cam 19, rotation lever 21, link 26, operation lever 23 and middle shaft 25 assembled thereon in advance, is mounted fixedly to the rear arm 5.

When the rotation lever 29 of the drum brake 3 is rotated from an initial position in which the brake shoes 15A, 15B are disengaged from the cylindrical brake drum 13 and the rotary member 9 is rotatable, the middle shaft 25 is rotated to thereby rotate the cam 19 through the operation lever 23, link 26 and rotation lever 21 constituting the link mechanism, the brake shoes 15A, 15B are stretched open by the cam section 19B of the cam 19, and the brake linings (not shown) provided on the outer side of the brake shoes 15A, 15B come in frictional contact with the inside circumferential wall of the cylindrical brake drum 13, which restricts rotation of the rotary member 9 and the rear wheel RW1.

In the drum brake 3, one end each of the brake shoes 15A, 15B is supported for rotation by the support section 17A formed by the same single member as the body of the fixed member 17, so that the fixed member is not required to be provided with an additional anchor member as in the conventional system, which simplifies the construction of the support section supporting the one end each of the brake shoes 15A, 15B of the drum brake 3.

The anchor member 122 of the conventional drum brake 100 is provided with the flanged section 122B, brake shoe retainer groove 122D, and male thread section at the base end, which increases manufacturing costs of the anchor member 122. This anchor member 122 is dispensed with in this system, so that manufacturing costs of the drum brake 3 can be reduced easily.

Also, in the drum brake 3, the rotation lever 21 for rotating the cam 19 is provided integrally on the cam 19; the rotation lever 21, and the operation lever 23 provided at one end of the middle shaft 25 for operating the operation lever 23, are disposed in approximately the same plane (plane approximately perpendicular to the axes of the rear wheel RW1 and the rotary shaft member 7), and the forward end of the rotation lever 21 and that of the operation lever 23 are pivotally connected through the link 26 to form the link mechanism, and further the link mechanism disposed on that same plane is provided in a narrow space (axial width of the rear wheel RW1 is narrow) between the fixed member 17 and the rotary electric machine EW1, so that the width or lateral (axial) dimension around the rear wheel RW1 of the two-wheeler 1 equipped with the drum brake 3, can be decreased to the smallest possible degree.

In other words, the rotary electric machine EM1 disposed coaxially with the rotation axis of the rear wheel RW1, can be brought closer to the drum brake 3 compared with the conventional system.

Further, in the two-wheeler 1, the rotary electric machine EM1 constitutes a hole-in motor disposed inside the rear end of the rear arm 5 and, for example, an axial gap motor of small size in the axial direction (axially thin) is adopted as the rotary electric machine EM1, so that the width or lateral (axial) dimension around the rear wheel RW1 of the two-wheeler 1 equipped with the drum brake 3, can be further decreased.

As a result, the center of gravity in the lateral direction around the rear wheel RW1 of the two-wheeler 1 can be brought closer to the center of the rear wheel RW1 compared with the conventional system, improving the lateral stability of the two-wheeler 1. Also, the amount of protrusion of the rear wheel RW1 of the two-wheeler 1 in the direction in which the rotary electric machine EM1 is provided, can be decreased to the smallest possible degree.

Further, in the brake drum 3, the rotation lever 21 is provided with the shaft section 21A supported in the fixed member 17 for rotation and the cam 19 is provided integrally in the inside circumference of the shaft section 21A of the rotation lever 21, so that the axial dimension of the rotation lever 21 and the cam 19 can be decreased, as well as protrusion dimension of the rotation lever 21 from the fixed member 17. Thus, the axial dimension of the drum brake 3 can be decreased.

Further, in the brake drum 3, the conventionally requisite anchor member is dispensed with, that is, the number of parts constituting the drum brake 3 can be decreased by one, so that accumulated errors of the drum brake 3 after assembling caused by manufacturing errors of components of the drum brake 3, can be decreased to the smallest possible degree.

In the drum brake 3, the cam 19 may be rotated using a power transmission member such as a wire cable in place of the operation lever 23, link 26 and rotation lever 21.

In addition, the drum brake 3 may also be adopted in the rear wheel of a two-wheeler of which rear wheel is driven by an internal combustion engine, in a wheel other than the rear wheel, or in wheels of vehicles other than two-wheelers.

Now, the wire cable 27 running from the handle HD1 to the rear wheel RW1 to drive the drum brake 3 of the rear wheel RW1 of the two-wheeler 1 will be described (see Fig. 1).

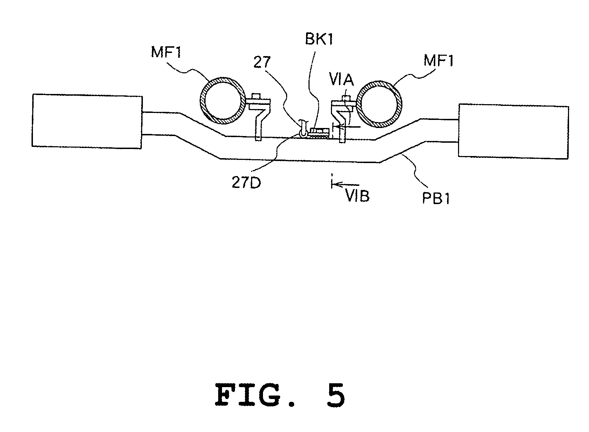

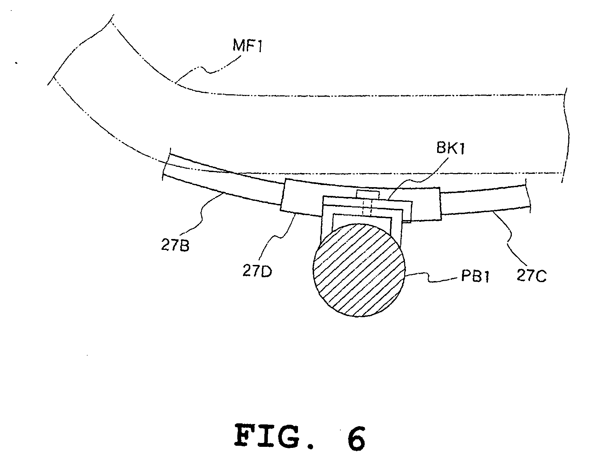

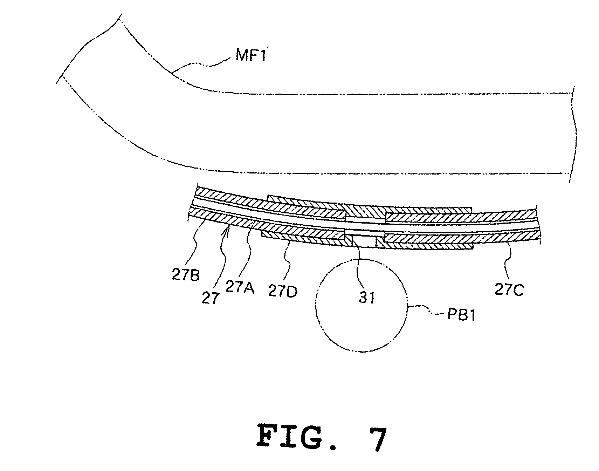

Fig. 5-Fig. 7 are views showing the lowest portions of the wire cable 27 provided in the two-wheeler 1; Fig. 5 is a view taken in the direction of arrows VA-VB of Fig. 1; Fig. 6 is a view taken in the direction of arrows VIA-VIB of Fig. 5; and Fig. 7 is a view showing a cross-section of the wire cable 27 in the axial direction.

In the two-wheeler 1, the middle shaft 25 of the drum brake 3 is provided on the upper side of the rear arm 5 at the rear end thereof. At the forward end of the middle shaft 25 is provided the rotation lever 29 (see Fig. 1). The rotation lever 29, as described above, is fixed at the base end to the middle shaft 25, and to the forward end of the rotation lever 29 is attached the wire cable 27.

The wire cable 27 runs from a brake lever for the rear wheel brake provided on the handle HD1 of the two-wheeler 1 to the rotation lever 29, passing, through a position below the rear wheel brake lever and the operation lever 29 approximately at the middle of the main frame MF1 of the two-wheeler 1 (see Fig. 1).

The wire cable 27, as shown in Fig. 7, is comprised of long tubular cover members 27B, 27C, and a long core wire 27A provided inside the cover members 27B, 27C for longitudinal movement, and capable of transmitting a mechanical operation signal according to the amount of movement of the core wire 27A relative to the cover members 27B. 27C.

At the lowest position of the wire cable 27 running from a first portion of the two-wheeler, including the rear wheel brake lever of the handle HD1, to a second portion other than the first portion, including the drum brake 3, all the way lower than the first and the second portions, and below the cover members 27B, 27C is provided a through hole 31 through which water entering a gap between the core wire 27A and the cover members 27B, 27C is discharged (see Fig. 7).

Now, the wire cable 27 and the through hole 31 will be described in detail.

The wire cable 27 provided on the two-wheeler 1, as shown in Figs. 5, 6, is fixed at its lowest position, for example, to a pedal support member PB1 mounted to the main frame MF1 in a space thereunder, through a bracket BK1 provided on the outside circumferential surface of a cylindrical connecting member 27D.

Also, as shown in Fig. 7, the core wire 27A of the wire cable 27 is covered by the cover member 27B between the connecting member 27D and the rear wheel brake lever of the handle HD1, and by the cover member 27C between the connecting member 27D and the rotation lever 29 of the drum brake 3.

Also, on both longitudinal ends of the connecting member 27D are provided an engagement hole engageable with the outside circumference of one end of the cover member 27B and another engagement hole engageable with the outside circumference of one end of the cover member 27C, and engagement of one end each of the cover members 27B, 27C with the both longitudinal ends of the connecting member 27D causes the cover members 27B, 27C to be fixed to the connecting member 27D.

In the longitudinal middle section of the connecting member 27D is provided a through hole for the core wire 27A to pass through, coaxially with the engagement holes at the both longitudinal ends of the connecting member 27D.

At the longitudinal middle portion of the connecting member 27D is provided the through hole 31 for connecting the through hole in the foregoing longitudinal middle section to the outside of the connecting member 27D. The through hole 31 is provided penetrating the connecting member 27D from inside the connecting member 27 (the gap between the core wire 27A and the connecting member 27D) in the downward direction of the two-wheeler 1 when the connecting member 27D is fixed to the pedal support member PB1 of the main frame MF1, to discharge water inside the connecting member 27D to the outside, and provided so as to be at the lowest position of the wire cable 27.

In the wire cable 27, the through hole 31 connecting the gap between the cover members 27B, 27C, the connecting member 27D, and the core wire 27A of the wire cable 27 to the outside of the wire cable 27, is provided at the lowest position of the wire cable 27, so that water entering in the gap from either end of the wire cable 27 can be discharged easily to the outside of the wire cable 27 through the through hole 31.

In this way, water inside the wire cable 27 can be discharged easily, so that the rusting of the core wire 27A of the wire cable 27 can be prevented.

Moreover, according to a modification of the invention, a drum brake for a vehicle is configured such that one end each of a pair of brake shoes is adapted to be in frictional engagement with the inside circumferential surface of the brake drum provided in a rotary member, and is supported by a fixed member provided inside said brake drum, wherein support sections of said pair of brake shoes to said fixed member are each formed in a convex shape and supporting portions of said fixed member to said pair of brake shoes are each formed in a concave shape to be fitted for rotation to said convex shaped section.

Furthermore, according to another modification of the invention a drum brake for a vehicle is configured such that one end each of a pair of brake shoes is adapted to be in frictional engagement with the inside circumferential surface of the brake drum provided in a rotary member, and is supported by a fixed member provided inside said brake drum, wherein support sections of said pair of brake shoes to said fixed member are each formed in a concave shape and supporting portions of said fixed member to said pair of brake shoes are each formed in a convex shape to be fitted for rotation to said concave shaped section.

Here, advantageously a drum brake for a vehicle can be provided in which a support section for supporting one end each of brake shoes of a drum brake has a simple construction.

According to still another modification of the invention a drum brake for a vehicle is configured such that one end each of a pair of brake shoes is adapted to be in frictional engagement with the inside circumferential surface of the brake drum provided in a rotary member, and is supported by a fixed member provided inside said brake drum or an anchor member provided in the fixed member, and a cam for opening/closing the other ends of said brake shoes is provided on said fixed member for rotation, wherein a rotation lever for rotating said cam is provided integrally on said cam, said rotation lever and an operation lever provided at one end of a middle shaft for operating said operation lever are disposed in approximately the same plane, and the forward end of said rotation lever and that of said operation lever are pivotally connected through a link.

Therein, said rotation lever has a shaft section supported on said fixed member for rotation, and said cam is provided integrally on said shaft section of said rotation lever.

Here, it is an advantage that a drum brake for a wheel of a vehicle can be provided in which the width or lateral dimension around the wheel of the vehicle equipped with the drum brake can be decreased to the smallest possible degree.

Finally with other words, a drum brake for a vehicle according to a further modification of the invention comprises a pair of brake shoes with supported sections at one end, respectively, a fixed member with a supporting section for supporting said supported sections of said pair of brake shoes, and a rotary member for housing said pair of brake shoes and said fixed member, wherein said supported sections of said pair of brake shoes and said supporting section of said fixed member comprise a complementary shape to each other.

Here, advantageously, said supported sections comprise a convex shape and said supporting section comprises a concave shape or said supported sections comprise a concave shape and said supporting section comprises a convex shape.

## Claims

1. A drum brake (3) for a vehicle (1) comprising a pair of brake shoes (15A,15B) and a fixed member (17), wherein one end of each brake shoe (15A,15B) is pivotally supported by said fixed member (17), **characterized by** a contact portions of said end of each brake shoe (15A,15B) and of said fixed member (17) comprising a complementary shape.

2. A drum brake (3) according to claim 1, **characterized in that** said contact portions are defined by supported sections (15C,15D) provided at said respective one end of said brake shoes (15A,15B) and by a supporting section (17A) for supporting said supported sections (15C,15D) of said pair of brake shoes (15A,15B) provided at said fixed member (17).

3. A brake drum (3) according to claim 2, **characterized in that** said supported sections (15C,15D) comprise a convex shape and said supporting section (17A) comprises a concave shape.

4. A drum brake (3) according to claim 2, **characterized in that** said supported sections (15C,15D) comprise a concave shape and said supporting section (17A) comprises a convex shape.

5. A drum brake (3) according to at least one of the preceding claims 2 to 3, **characterized in that** said supported sections (15C,15D) and said supporting section (17A) are secured to each other by a bolt (BT1) and a washer (WS1).

6. A drum brake (3) for a vehicle (1), which comprises a rear arm (5) for supporting a rear wheel (RW1), comprising a pair of brake shoes (15A,15B), a fixed member (17), and a cam (19) for causing said pair of brake shoes (15A,15B) to pivot, wherein a rotation lever (21) for rotating said cam (19) and an operation lever (23) pivotally connected at its one end to said rotation lever (21) by a link (26) are provided within said fixed member (17).

7. A drum brake (3) according to claim 6, **characterized in that** said rotation lever (21) is provided integrally on said cam (19), and said rotation lever (21), said operation lever (23) and said link (26) are disposed in approximately a same plane.

8. A drum brake (3) according to claim 6 or 7, **characterized in that** said rotation lever (21) comprises a shaft section supported on said fixed member (17) for rotation, and said cam (19) is provided integrally on said shaft section of said rotation lever (21).

9. A drum brake (3) according to at least one of the preceding claims 6 to 8, **characterized in that** said rotation lever (21), said operation lever (23) and said link (26) are disposed inside said rear arm (5) of said vehicle (1).

10. A drum brake (3) according to at least one of the preceding claims 6 to 9, **characterized in that** said operation lever (23) is connected at its other end to a further rotation lever (29) connected to an operating wire (27) of the brake drum (3) by a middle shaft (25), wherein said middle shaft (25) is joined with said operation lever (23) inside of said rear arm (5) and with said further rotation lever (29) outside of said rear arm (5).
